(19) Europäisches Patentamt / European Patent Office / Office européen des brevets

(11) **EP 3 222 912 B1**

(12) **EUROPEAN PATENT SPECIFICATION**

(45) Date of publication and mention
of the grant of the patent:
**20.02.2019 Bulletin 2019/08**

(51) Int Cl.:
*F23K 1/00* *(2006.01)*     *F23K 3/02* *(2006.01)*
*F23G 7/10* *(2006.01)*     *F23C 3/00* *(2006.01)*
*F23L 15/00* *(2006.01)*     *F23M 5/08* *(2006.01)*
*F22B 33/18* *(2006.01)*     *F28F 13/00* *(2006.01)*
*F22B 21/00* *(2006.01)*     *F22B 21/02* *(2006.01)*

(21) Application number: **14906156.6**

(22) Date of filing: **17.12.2014**

(86) International application number:
**PCT/CN2014/094006**

(87) International publication number:
**WO 2016/078177 (26.05.2016 Gazette 2016/21)**

(54) **BIOMASS MICRON FUEL HIGH-TEMPERATURE INDUSTRIAL BOILER**

HOCHTEMPERATUR-INDUSTRIEKESSEL FÜR BIOMASSE-MIKRON-BRENNSTOFF

CHAUDIÈRE INDUSTRIELLE À HAUTE TEMPÉRATURE À COMBUSTIBLE DE TAILLE
MICROMÉTRIQUE À BASE DE BIOMASSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2014 CN 201410663735**

(43) Date of publication of application:
**27.09.2017 Bulletin 2017/39**

(73) Proprietor: **Wuhan Jianghechang Energy And
Technology Co., Ltd.
Wuhan, Hubei 430074 (CN)**

(72) Inventors:
• **XIAO, Bo**
**Wuhan**
**Hubei 430074 (CN)**
• **ZHANG, An**
**Wuhan**
**Hubei 430074 (CN)**
• **XIAO, Bojian**
**Wuhan**
**Hubei 430074 (CN)**
• **ZENG, Fanjun**
**Wuhan**
**Hubei 430074 (CN)**
• **HU, Zhiquan**
**Wuhan**
**Hubei 430074 (CN)**
• **JIN, Shiping**
**Wuhan**
**Hubei 430074 (CN)**
• **HUANG, Chuanwu**
**Wuhan**
**Hubei 430074 (CN)**

(74) Representative: **Hryszkiewicz, Danuta et al
Matthias Scholl, Inc.
Friedrichstrasse 123
10117 Berlin (DE)**

(56) References cited:
**EP-A1- 1 221 573     EP-A2- 2 039 994
EP-A2- 2 039 994     WO-A1-2013/078423
CN-A- 102 818 247     CN-C- 1 278 071
CN-U- 203 203 246     US-A- 5 355 843**

**Description**

The invention relates to the field of the renewable clean energy device, and more particularly to a micron-biofuel high-temperature industrial boiler.

China has a capacity of industrial boilers of 650,000, of which 85% is coal-fired boilers. Industrial boilers have supporting significance for the national economy, and 700 million tons of standard coal is consumed each year, accounting for 20% of China's annual coal production. However, in the coal-based industrial system, a great quantity of polluting dust is discharged to the environment each year, accounting for 33% of China's total annual emissions of soot. In addition, the change of the raw materials to the natural gas and the oil further accelerates the depletion of the resources, which challenges the new energy exploration.

Biofuels are a kind of new type of clean fuel that is directly combustible and is prepared by crushing, mixing, extruding, and drying agricultural wastes, such as straw, sawdust, bagasse, rice bran, and so on. The development of the biofuels can not only reasonably utilize the agricultural waste and prevent the energy waste, but also reduce the discharge of $CO_2$, $SO_2$, $NO_x$ and the dust and avoid the haze phenomenon, thus has extensive application prospect at home and abroad.

The document CN 102 818 247 A discloses a micron-biofuel high-temperature industrial boiler comprising: a radiative heat exchange boiler furnace, comprising at least one fuel nozzle installed on a bottom of the boiler, a water-pipe thermal insulation layer, a non-fire section disposed on a middle-lower part in the boiler, a drum disposed at a top of the cavity of the boiler, and a slagging mechanism disposed at the bottom of the boiler; a coal economizer, an air preheater, and wherein the at least one fuel nozzle is configured to spray a fluid state dust cloud formed by premixing a micron-biofuel with air into non-fire section in a tangential direction; a sidewall of the non-fire section is formed by a layer of thermal insulation materials, and is surrounded by the water-pipe thermal insulation layer to make a heat quantity passing through a sidewall smaller, thus forming a relatively closed space for thermal storage and combustion; a radiative heat exchange water cooling wall is installed on a top of the non-fire section and extended to the drum; irradiative heat transfer is performed between the high temperature flame produced from combustion and the radiative heat exchange water cooling wall; high temperature steam is accumulated to the drum; a convective heat exchange unit, comprises a water inlet; a water outlet connected to the radiative heat exchange water cooling wall; and the convective heat exchange unit is connected to the radiative heat exchange boiler via a flue gas outlet disposed at an upper part of a boiler furnace to realize the convective heat exchange of flue gas produced from the high temperature combustion in the boiler; the coal economizer and the air preheater are respectively arranged downstream of the convective heat exchange unit, and the flue gas passing through the coal economizer and the air preheater respectively heats the water and the air entering the boiler; the preheated air is transported to non-fire section so as to improve the combustion temperature in the boiler. The document US 355 843 A describes a boiler with air-cooled walls, a separate combustion chamber inside and distant from the boiler walls, which might be considered a super-adiabatic combustion chamber. It also comprises a convective heat exchanger, an economizer, an air preheater, fuel injection nozzles, flue gas treatment. The document EP 2 039 994 A2 shows a boiler which comprises a convective heat exchanger, an economizer, an air preheater, fuel injection nozzles, flue gas treatment.

The inventor of the present invention has published a patent (CN2714965Y) concerning to a biomass dust cloud burner in 2004, in which the biomass dust cloud is fed into the gasification combustion chamber and ignited, and continuous and stable combustion of the fuel is ensured via thermal storage substance in the case of feeding fluctuation, thus reaching the combustion temperature of exceeding 1200°C.

However, further studies have shown that the prior art has the following problems: first, for most of today's industrial applications, such as efficient steam power generation system for the boiler, the combustion temperature of the fuel is required to reach higher than 1500°C. This is mainly because the constraint of the Carnot cycle principle, as long as the boiler fuel reaches a sufficiently high combustion temperature, the high pressure and high temperature steam can be produced, then the converted mechanical energy is utilized to realize the power generation of economic value. In addition, according to the Steven - Boltzmann theory, the energy that is via radiation transferred to the ambient by a unit area of a blackbody surface within a unit time is proportional to the four square of the absolute temperature of its surface. In other words, the high temperature allows the same fuel energy to play a higher efficiency. For example, when the fuel combustion temperature is increased from 1400°C to 1450°C, the thermal energy acquired by the radioactively heated substance is increased by 12%. 700 million tons of coal is consumed by China's industrial boilers every year, which indicates that when each saves 1% of energy consumption, 7 million tons of coal consumption is saved each year, concerning to a direct economic benefit of more than 5.6 billion yuan and reduction of 18 million tons of carbon dioxide emissions. Therefore, it is of great significance for China's sustainable development to improve the energy efficiency level and the protection and utilization level of industrial boilers.

However, the above-mentioned combustion temperature cannot be achieved only dependent on the combustion mode of the micron biofuel or the dust cloud and the thermal storing substance disclosed in CN2714965Y. Besides, according to the chemical composition analysis, the biofuel is a complicate solid material of high molecular hydrocarbons, which is difficult to be fast combusted. Because the polymer contains more carbon and less hydrogen, the small molecules containing hydrogen is firstly combusted, which inevitably produces substances difficult to contact with oxygen, such as tar, carbon residue and ashes in solid state, so when their stay in the industrial boiler furnace is relatively limited, it is not in time for full contact with oxygen combustion and will be separated from the corresponding combustion environment, become a waste of energy and the environment pollution of tar and carbon particles, then form aerosols and haze pollution sources. Due to the formed biofuels is pressed into compact particles having a diameter of 10 mm, the combustion rate and the combustion temperature are low, the tar and the carbon particles produced from the combustion are discharged along with the flue gas, which makes the formed biofuels also regarded as highly polluting fuels in some areas and are not advocated for use.

It is particularly important that for thousands of years biomass has been constrained by the ideas that have been followed at home and abroad, and the biofuel boilers are designed using the stratified combustion method of solid fuel coal, which cannot be separated from furnaces of large areas and ash outlets of large areas, leading to great heat loss and low structural thermal efficiency of the boiler. These are dependent on the conventional biofuel layer combustion characteristics. But in fact, biomass micron biofuel belongs to the category of gas fuel and does not has the stratified combustion characteristics. Therefore, it is necessary to develop the industrial boiler with high energy utilization efficiency based on the combustion characteristics of the biomass micron biofuel to realize the clean production of the industrial steam.

In view of the above-described problems, it is one objective of the invention to provide a micron-biofuel high-temperature industrial boiler. By premixing the micron biofuel which having a particle size of smaller than 400 $\mu$m with air, the ultra-high temperature combustion is performed in a relatively adiabatic environment. According to the Stephen-Boltzmann theory, the high combustion temperature of the biomass micron biofuel is fully utilized for radiative heat exchange of the boiler, so as to acquire the high efficient biomass industrial boiler. At the same time, by studying and designing the specific structures, the arrangements, and the critical parameters of the critical components, including the super-adiabatic combustion chamber, the radiative heat exchange unit, the convective heat exchange unit and the feeding port. the combustion temperature reaches 1500°C above, and the thermal efficiency of the boiler reached 90% above, thus satisfying more heating requirements for the high temperature production. Meanwhile, compared with the prior art, the product almost contains no tar, carbon residue, or ash, thus especially suitable for the industrial boiler application environment which producing the clean and effective steam.

To achieve the above objective, in accordance with the invention, there is provided a micron-biofuel high-temperature industrial boiler, characterized in that the industrial boiler comprises: a radiative heat exchange boiler, a convective heat exchange unit, a coal economizer, an air preheater, and a flue gas treating unit. The radiative heat exchange boiler comprises: at least one fuel nozzle installed on the bottom of the boiler, a cold wall thermal insulation layer, a super-adiabatic combustion chamber disposed on the middle-lower part in a cavity of the boiler, a drum disposed at the top of the cavity of the boiler, and a slag discharging mechanism disposed at the bottom of the boiler. The at least one fuel nozzle are configured to spray a fluid state dust cloud formed by premixing a micron-biofuel with air into the super-adiabatic combustion chamber. The fuel nozzle is adapted to spray the fluid state dust in a tangential direction at a flow rate of between 1m/s and 10 m/s. The super-adiabatic combustion chamber is adapted such that the volumetric combustion intensity of the adiabatic combustion chamber is set to be 150 kg/m$^3$-350 kg/m$^3$, its sidewall of the super-adiabatic combustion chamber is formed by a layer of thermal insulation materials, and is surrounded by the waterpipe thermal insulation layer. The waterpipe thermal insulation layer is adapted to make a heat quantity passing through a sidewall equal to or smaller than 10% of a combustion energy of the fuel, thus forming a relatively closed space for thermal storage and combustion. A radiative heat exchange water cooling wall is installed on a top of the super-adiabatic combustion chamber and extended to the drum. When in use, the high temperature flame produced by the fuel performs radiation heat transfer on the radiant hot water cooling wall, and produced high temperature steam accumulated to the drum. The convective heat exchange unit and the radiative heat exchange boiler are separately arranged. The convective heat exchange unit comprises: a water inlet and a water outlet connected to the described radiative heat exchange water cooling wall, and is connected to the described radiative heat exchange boiler via a flue gas outlet disposed at an upper part of a boiler furnace to realize the convective heat exchange of flue gas produced from the high temperature combustion in the super-adiabatic combustion chamber. The described coal economizer and the air preheater are respectively arranged on a downstream of the convective heat exchange unit, and the coal economizer and the air preheater are adapted such that the flue gas passing through the coal economizer and the air preheater respectively heats the water and the air entering the boiler. The super-adiabatic combustion chamber is adapted such that preheated air is transported to the super-adiabatic combustion chamber so as to improve the combustion temperature in the super-adiabatic combustion chamber. The flue treating unit is disposed in the downstream of the air preheater and is adapted to remove dust from the flue gas and discharging the flue gas.

Preferably, the fuel nozzle is adapted to spray the fluid state dust cloud that is a mixture of the micro-biofuel and air and that has an excess air coefficient of 0.98-1.25 into the super-adiabatic combustion.

Preferably, the super-adiabatic combustion chamber further comprises a steam inlet adapted to supplement a proper amount of steam to the super-adiabatic combustion chamber during the combustion process. The super-adiabatic combustion chamber is adapted such that a ratio of an addition of the steam to a weight of the micron-biofuel is set to 1:30 -150:1.

Preferably, the super-adiabatic combustion chamber is adapted such that the volumetric combustion intensity of the super-adiabatic combustion chamber is set to 200 - 300 kg/m$^3$, and a heat quantity passing through the sidewall of the super-adiabatic combustion chamber is equal to or smaller than 3% - 6%.

Preferably, the super-adiabatic combustion chamber is a relatively closed thermal storage space enclosed by a sidewall formed by a layer of a fiber thermal insulation material, and its thickness of the sidewall is 80 - 320 mm, and a ratio of a height of the combustion chamber and an average area of a cross section thereof is 0.8-4.

Preferably a diameter of the fuel nozzles is set to be between 1/20 -1/8 of a diameter of the super-adiabatic combustion chamber. A caliber of a slagging piston at a lowest level of the super-adiabatic combustion chamber is 1/25 -1/15 of the diameter of the super-adiabatic combustion chamber, and preferably 1/22-1/18.

Preferably, a bottom of the radiative heat exchange boiler also comprises a service manhole for maintaining a furnace. A service pit is disposed beneath the service manhole to form a service passage to the furnace. One end of the service passage is inclined downwardly, and an automatic pumping mechanism is disposed at a lowest end of the service passage to prevent pit water from discharging in time.

Preferably, the super-adiabatic combustion chamber is adapted such that a first average combustion temperature of the super-adiabatic combustion chamber is 1500-1600°C when the air at the normal temperature and the micron-biofuel are pre-mixed and combusted, and a second average combustion temperature of the super-adiabatic combustion chamber is 1620-1700°C when the air preheated at 70-150°C and the micro-biofuel are pre-mixed and combusted.

In summary, compared with the prior art, the above technical solution of the invention has the following advantages:

1. By designing the adiabatic combustion chamber for the combustion of the micron-biofuel and by setting the critical performance parameters, such as the volumetric combustion intensity and the thermal intensity, the relatively closed space for thermal storage and combustion is formed, the closed space accommodates the energy of the micron-biofuel with relatively low energy intensity and provides conditions for high temperature combustion. In addition, the gasification and the combustion of the micro-powder is accomplished simultaneously within the same space, which in turn, facilitates the continuous increase of the combustion temperature, thus realizing the significantly improved combustion temperature compared with the prior art, and the combustion efficiency reaches 98% above.

2. By designing parameters including the specification and dimension of the fuel nozzle and the slagging mechanism, a greater ratio of area to volume of the industrial boiler, that is, the ratio of an area of the water cooling wall to an integral volume of the boiler. In addition, reactants for combustion are always in a suspended mist state and not precipitated in the bottom of the combustion chamber, which is correspondingly helpful to the complete combustion and improve the combustion temperature.

3. A proper proportion of the steam is added to the combustion process, steam is used as a gasifier and an intermediate to participate the reaction in the whole combustion process, and decomposed into hydrogen and carbon monoxide. Hydrogen further accelerates the speed of the combustion in the relatively closed adiabatic space, so that the expected combustion temperature peak and the combustion efficiency are realized within a short time.

4. By separating the radiative heat exchange from the convective heat exchange in the process flow, in this way, the heat transfer design can be performed more rationally, and make full use of high temperature flue gas suitable for efficient radiation heat transfer characteristics, the overall heat exchange efficiency can be remarkably improved, and the biomass industrial boiler equipment with high efficiency can be obtained. It was indicated from tests that the thermal efficiency of the boiler can be as high as 90% above. In addition, high temperature combustion of biomass lead to the melting of inorganic ash in the combustion chamber fully and converted to liquid slag. The bottom of the boiler is installed with a liquid slag discharge system. Compared with the industrial boiler in the prior art, the heat loss of the boiler resulted from the large area of the ash discharging port is greatly reduced. The invention in the boiler manhole of boiler is arranged at the bottom and set corresponding service pit for maintenance. Compared with the industrial boiler, the integrity of the water cooling wall structure is ensured, the heat exchange area of the water cooling wall is improved, which makes the manufacture of the boiler convenient. As little inorganic substance is contained in the biomass, which is approximately 1 wt. %, when the biomass substance is converted into lithe liquid state, the volume of the slag is much less. Meanwhile, the liquid slag is discharged under the force of gravity, with this configuration can conveniently slag out and carry out furnace maintenance . Compared with the industrial boiler in the prior art, the boiler furnace contains no mechanical structure, therefore, the failure rate is low, and the maintenance frequency of the furnace is low.

5. The combustion temperature of the micron-biofuel is further improved to 1500-1600°C, the intermediates including tar and carbon particles are totally decomposed, and the incombustible inorganic components are molten and converted into a liquid slag within the adiabatic combustion chamber and discharged from the bottom of the boiler. Compared with the industrial boiler in the prior art, the boiler of the invention has advantages in the environmental protection, so satisfies the clean and efficient requirements in application environment of different kinds of industrial boilers.

FIG. **1** is a structure diagram of a micron-biofuel high-temperature industrial boiler;

FIG. **2** is a primary structure diagram of a radiative heat exchange boiler and configured super-adiabatic combustion chamber in FIG. **1**

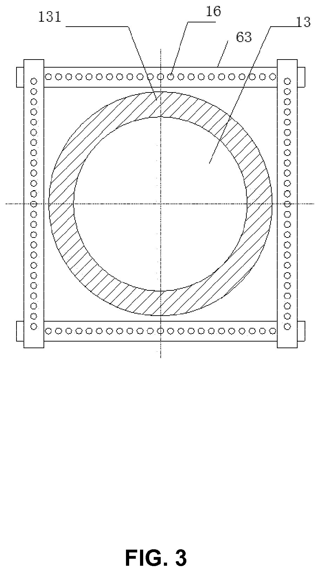

FIG. **3** is a structure diagram showing relative positions of the adiabatic combustion chamber and the radiative heat exchange water cooling wall in FIG. **1**.

In the drawings, the following reference numbers are used:
**1.** Radiative heat exchange boiler; **2.** Convective heat exchange unit; **3.** Coal economizer; **4.** Air preheater; **5.** Flue gas treating unit; **11.** Fuel nozzle; **12.** Waterpipe thermal insulation layer; **13.** Super-adiabatic combustion chamber; **14.** Drum; **15.** Slagging mechanism; **16.** Radiative heat exchange water cooling wall; **17.** Flue gas outlet; **21.** Convective heat exchange water inlet; **22.** Convective heat exchange water outlet; **23.** Convective heating surface; **24.** Convective flue gas outlet; **32.** Ash hopper of coal economizer; **33.** Cold water inlet of boiler; **34.** Flue gas inlet of coal economizer; **35.** Flue gas outlet of coal economize; **41.** Hot air outlet; **42.** Coal air inlet; **43.** Water inlet; **44.** High level safe waterpipe; **45.** Water gauge; **46.** Water outlet; **51.** Dedusting flue gas inlet; **52.** Flue gas outlet; **53.** Dedusting upper cover manhole; **131.** Sidewall; **59.** Slagging piston; **60.** Vertical pipe; **61.** Service manhole; **62.** Service pit **63.** Header.

In order to make the purpose of the invention, the technical scheme and the advantages more clear, the invention is further described in detail combining with the accompany drawings and examples. It should be noted that the embodiment described here is only used to explain the invention and not to limit the invention. In addition, the technical features involved in the examples can be combined within the scope of the appended claims, as long as they are not conflicted.

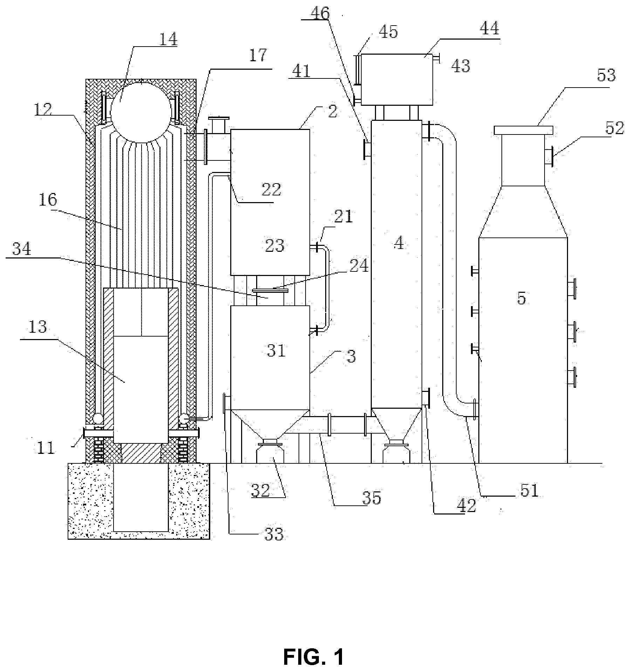

FIG. **1** is an overall structure diagram of a micron-biofuel high-temperature industrial boiler. As shown in FIG. **1,** the micron-biofuel having an average particle size of below 400 $\mu$m is premixed with air and combusted in an adiabatic environment. The industrial boiler comprises: a radiative heat exchange boiler **1,** a convective heat exchange unit **2,** a coal economizer **3,** an air preheater **4,** and a flue gas treating unit **5.** By studying and designing specific structures, arrangements, and critical parameters of critical components, including the super-adiabatic combustion chamber, the radiative heat exchange unit, the convective heat exchange unit, and a feed-discharge port, an average combustion temperature as high as 1500°C is correspondingly obtained and the thermal efficiency of the boiler reaches exceeding 90%, which satisfies the requirements of more application occasions of the industrial boiler, and the products contain almost no tar, carbon residue, or ash, compared with the prior art.

Specifically, the radiative heat exchange boiler **1,** for example, in a vertical structure, comprises: fuel nozzles **11** installed at a bottom of a furnace, waterpipe thermal insulation layers **12** uniformly distributed in a wall of the furnace, an adiabatic combustion chamber **13** disposed on a middle-lower part of the furnace, a drum **14** disposed at a top of a cavity of the furnace, and a slagging mechanism **15** disposed at a bottom of the furnace. A number of the fuel nozzles **11** is one or several. A diameter of the fuel nozzle **11** is set to be 1/20-1/8 of a diameter of the combustion chamber. The fuel nozzles **11** are configured to spray a fluid state dust cloud formed by premixing a micron-biofuel having an average particle size of smaller than or equal to 400 $\mu$m (for example, 220 $\mu$m) with air into the diabatic combustion chamber **13** in a tangential direction at a flow rate of 1m/s-10 m/s, so that the fluid state dust cloud is instantly gasified into a suspended mist state once leaving the fuel nozzles and is therefore prevented from falling to the bottom of the combustion chamber.

In addition, according to the preferred embodiment of the present invention, the micron-biofuel and the air are premixed according to an excess air coefficient of 0.98-1.25, particularly 1.0-1.15, and then ejected into the adiabatic combustion chamber **13** via the fuel nozzles **11.** The reason for the above specific settings is as follows: firstly, the air is necessitated for the combustion of the biomass, but actually the oxygen in the air which accounts for 21% of the air is virtually necessary, while a predominant of the air is nitrogen. As oxygen and nitrogen have almost the same molecular weights, the separation there between is difficult; besides, oxygen-enriched air and the pure oxygen are expensive, the air is often utilized in the combustion of the fuel in practice. When the oxygen of one cubic meter enters the adiabatic combustion chamber, nitrogen of four cubic meter, which is heat absorptive and reduces the temperature of the furnace, is carried in, thus, excess air should be prevented from in, and the excess air coefficient is set to be below 1.25. In the meanwhile, the micron-biofuel has porous mesh structure without compression, oxygen is able to permeate into the micro-structures, in addition, the biomass has a high content of evaporate components, and a solid structure at 500 centigrade can be decomposed by 70% and the hydrogen content is high. Thus, the excess air coefficient is controlled at exceeding 0.98. It was indicated from comparative tests that the probability of diffusion of the oxygen in the air in the fluid dust cloud towards a surface of the biomass particles can be effectively increased, so that the complete combustion of the biomass particles in the presence of the sire is ensured, the amount of the excessive air is reduced, and the combustion efficiency is improved.

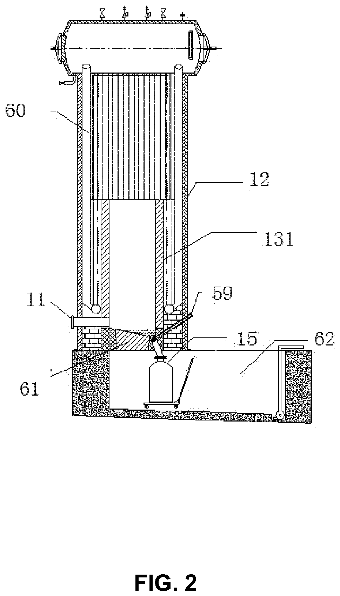

As shown in FIG. **2,** as a critical improvement of the invention, the volumetric combustion intensity of the adiabatic combustion chamber **13** is set to 150 kg/m3-350 kg/m3, preferably 200 kg/m3-300 kg/m3. The sidewall of the adiabatic combustion chamber **13** is formed by a thermal insulation layer, and a total of or 90% of the waterpipe thermal insulation layer **12** is configured to enclose the thermal insulation layer to prevent the heat quantity passing through the sidewall from exceeding 10% of the combustion energy of the fuel, preferably, no exceeding 3%-6% of the combustion energy of the fuel, thus forming a relatively closed space for thermal storage and combustion. In addition, the top of the adiabatic combustion chamber is installed with a radiative heat exchange water cooling wall **16** which communicates with a drum **14.** The water cooling wall is optionally in a circular or a rectangular structure. Thus, the fluid dust cloud is instantly gasified once leaving the fuel nozzle (within a distance of 0.5-2.5 folds of a caliber of the nozzle), and combusted with the premixed air in situ. A combustion temperature of 1500°C-1600°C is realized. The high temperature flame radioactively exchanges heat with the radiative heat exchange water cooling wall **16,** and produce high temperature steam is accumulated to the drum **14.** In addition, in the combustion process, the produced tar and carbon particles are completely decomposed before leaving the high temperature flame, but the incombustible ash is also molten into a glass liquid state after the combustion, precipitated to the bottom of the adiabatic combustion chamber, and then discharged via the slagging mechanism **15.**

Here in below, the principle and the technical effects of the above design are specifically explained as follows:

Because a relatively closed space for thermal storage and combustion is formed in the radiative heat exchange boiler, the energy of the biofuel is accumulated therein and the ultra-high temperature combustion condition is created. The ultra-high temperature combustion condition further ensures the gasification and the combustion of the micron-powder simultaneously and instantly within the same space, thus accelerating the instant decomposition and in situ combustion of the intermediates, including the tar and the carbon residue, in the combustion. Compared with the existing technology so as to achieve significantly improved combustion temperature, the combustion efficiency can reach above 98%, by adopting the principle of the high temperature heat exchange efficiency, 90% of the boiler heat connection of the biomass boiler is reached. Based on the reaction mechanism, the combustion is not the simple accumulation of the fuel in the furnace but is a large quantity of fuel molecules and oxygen molecules collides with each other at high speed to release the energy as soon as possible in the furnace, which contributes to the accumulation of the temperature, then disappear to allow new fuel to enter the furnace. In another word, within the same unit of furnace space and combustion time, the more energy the fuel is released, the greater quantity is accumulated within a certain combustion space, the higher the temperature is. According to the above design of the invention, it is demonstrated from a large quantity of comparative tests that a combustion temperature as high as 1500°C-1600°C can be acquired.

In addition, according to the thermal radiation theory, the radiation force is the full wavelength radiation energy for transmitting objects per unit surface area in unit time within the hemisphere space emitted, the unit is W/m2 and a relation between the radiation force and the temperature is as follows:

$$E_b \ = \ \int_0^\infty E_{b\lambda} d\lambda \ = \ \int_0^\infty \frac{c_1 \lambda^{-5}}{e^{c_2/(\lambda T)}} \mathrm{d}\lambda \ = \ \sigma T^4$$

Thus, when the combustion temperature is increased from 1300°C to 1450°C, the radiation force is increased:

$$\rho \ = \ \frac{\sigma \ (1723^4 \ - \ 1573^4)}{\sigma 1573^4} \times 100\% \ = \ 43.95\%$$

In another respect, taken a 4 t/h industrial boiler as an example, the capacity of the adiabatic combustion chamber is 1.8 cubic meter, an average temperature is 1500°C, the tar and the carbon residue can be quickly decomposed at 900°C and combusted in the presence of oxygen. A retention time $\tau$ of the combusted product in the furnace can be derived according to the following formula:

$$\tau \ = \ \frac{V \ \times 273}{B_j V_g (t_{av} \ + \ 273)}$$

in which, $B_j$ is a fuel consumption (kg/s), $V_g$ is a volume of the flue gas (Nm$^3$/kg), V is a volume of the furnace (m$^3$), $t_{av}$ is an average temperature of the flue gas (°C). It was calculated that the retention time of the flue gas in the adiabatic combustion chamber is $\tau$ = 0.26 s. Thus, the high temperature condition and the retention time of the flue gas of the invention effectively enable the tar and the carbon residue to be completely combusted, to realize the discharge of the flue gas in the absence of the tar or the carbon particles. Specific examples are described hereinbelow.

Example 1

A feed rate of the micron-biofuel is 700 kg/h, a caloric value of the fuel is 4100 Kcal/kg, the cavity of the super-adiabatic combustion chamber has a diameter of 1400 mm and a height of 1800 mm, the micron fuel and a certain amount of the air are uniformly mixed and a resulting mixture is sent into the cavity of the furnace at a tangential direction of the furnace from a bottom thereof at a speed of 5 m/s. The furnace cavity adopts refractory bricks as a liner, a thickness of the liner is 114 mm. Highly-purified alumina fiber cotton is arranged outside the liner for thermal insulation.

Test results of combustion temperatures in condition of different thickness of the thermal insulation cotton outside the liner and different excess air coefficient are listed in Table **1.**

## Table 1

| Testing temperature / Thickness of thermal insulation layer | Excess air coefficient | | | | |
|---|---|---|---|---|---|
| | 1.0 | 1.05 | 1.1 | 1.15 | 1.20 |
| 0 mm | 1352°C | 1383°C | 1395°C | 1390°C | 1367°C |
| 50 mm | 1416°C | 1430°C | 1445°C | 1446°C | 1420°C |
| 100 mm | 1460°C | 1489°C | 1510°C | 1508°C | 1465°C |
| 150 mm | 1484°C | 1510°C | 1543°C | 1538°C | 1490°C |

Example 2

A feed rate of the micron biofuel is 705 kg/h; a caloric value of the fuel is 4100 Kcal/kg. The cavity of the super-adiabatic combustion chamber has a diameter of 1400 mm, the micron fuel and 1.05 volume fold of the air are uniformly mixed and a resulting mixture is sent into the cavity of the furnace at a tangential direction of the furnace from a bottom thereof at a speed of 5 m/s. The furnace cavity adopts refractory bricks as a liner, a thickness of the liner is 114 mm. A layer of highly-purified alumina fiber cotton having a thickness of 150 mm is arranged outside the liner for thermal insulation. Test results of combustion temperatures of the super-adiabatic combustion chamber in conditions of different heights are listed in Table **2,** and test results of blackness of the flue gas at different temperatures of the super-adiabatic combustion chamber and different steam conditions.

## Table 2

| Height of super-adiabatic combustion chamber (m) | Addition of steam (kg/h) | | | |
|---|---|---|---|---|
| | 0 | 10 | 20 | 30 |
| 1 | 1211°C | 1215°C | 1218°C | 1212°C |
| 1.4 | 1430°C | 1460°C | 1475°C | 1470°C |
| 1.8 | 1518°C | 1541°C | 1550°C | 1544°C |
| 2.2 | 1540°C | 1552°C | 1563°C | 1546°C |

**Table 3**

| Height of super-adiabatic combustion chamber (m) | Addition of steam (kg/h) | | | |
|---|---|---|---|---|
| | 0 | 10 | 20 | 30 |
| 1 | 3 | 2 | 1 | 1 |
| 1.4 | 2 | 1 | 1 | 0 |
| 1.8 | 1 | 0 | 0 | 0 |
| 2.2 | 0 | 0 | 0 | 0 |

The combustion temperature of the invention is 150°C higher than that in the prior art, the radiation force within the combustion chamber is 43% higher than the comparative materials. In addition, the decomposition-gasification rate of the tar and the carbon residue are also greatly increased correspondingly, which is helpful to the clean combustion without resulting in the tar, the carbon, or the ash.

As another critical improvement of the invention, the convective heat exchange unit **2** and the radiative heat exchange boiler **1** are arranged separately. The convective heat exchange unit **2** comprises: a water inlet **21,** a convective heating surface **23**, a water outlet **22** connected to the radiative heat exchange water cooling wall **16.** The convective heat exchange unit **2** is connected to the radiative heat exchange boiler **1** via a flue gas outlet disposed at an upper part of a boiler furnace, so that the hot flue gas after the radiative heat exchange is used to perform convective heat exchange. By adopting the above design, the heat exchange design is reasonably performed, the high radiative heat exchange efficiency is fully utilized, the radiative heat exchange of the high temperature water is carried out by the high temperature flue gas, and the radiative heat exchange efficiency reaches 50-60% of the overall heat exchange efficiency of the boiler. In the meanwhile, the middle temperature flue gas is used to perform the convective heat exchange of the low temperature water, which correspondingly reduces the small temperature difference heat exchange in the whole heat exchange process and significantly improves the heat exchange efficiency. It is known from the tests that the thermal efficiency of the boiler reaches 90 above, and an overall energy efficiency also reaches 87% above.

In another preferred embodiment of the invention, a diameter of each of the at least one fuel nozzles **11** is set to be between 1/20 and 1/8 of a diameter of the combustion chamber **13**. A ratio of a volume of the super-adiabatic combustion chamber to a capacity of a cavity of the radiative heat exchange boiler is set to be 0.8:4.

Thus, all the combustion products are discharged by flue gas pipe with small cross section, and no large area of ash discharge grate is required. In another word, the area of the water cooling wall in unit volume of the boiler is correspondingly enlarged. The heat exchange furnace with a large ratio of the area to the volume further improves the thermal efficiency in practice.

In another preferred embodiment of the invention, the bottom of the radiative heat exchange boiler **1** is provided with a service manhole **18** for maintaining the furnace. A service pit **19** is disposed beneath the service manhole **18** to form a service passage to the furnace. Thus, the technical persons can enter the boiler from the bottom thereof via the service pit for maintenance. The integrity of the water cooling system of the boiler is improved, the manufacture is convenient, and the thermal efficiency of the boiler is improved. The caliber of the slagging piston at the lowest level of the super-adiabatic combustion chamber is 1/25-1/15 of the diameter of the combustion chamber.

According to another preferred embodiment of the invention, the super-adiabatic combustion chamber **13** is also configured with a steam inlet for supplementing a proper amount of steam to the super-adiabatic combustion chamber during the combustion process. A ratio of an addition of the steam to a weight of the micro-biofuel is set to between 1:30 and 1:150, more particularly between 1:60 and 1:120. The reason for the above operation and design is that water steam in the combustion process can be utilized as the gasifier and react with the intermediates of the combustion to further decompose hydrogen and carbon oxide. As the hydrogen is able to facilitate the combustion within a relatively closed adiabatic space, the expected peak value of the combustion temperature and efficiency can be ensured within a short period. For example, it was indicated from the tests that according to the set proportion of the steam and other combustion conditions, the dust cloud can be totally gasified after leaving the fuel nozzle in a distance of between 0.5 and 2.5 folds of the caliber. The intermediates, such as the tar and the carbon residue, are completely converted into the fuel gas in 0.1-0.2 seconds after the dust cloud leaves the fuel nozzle. All the fuel can be combusted within 0.5 seconds after the oxygen leaving the high temperature flame region.

In addition, the coal economizer **3** and the air preheater **4** are respectively arranged on a downstream of the convective heat exchange unit **2,** and the flue gas pass through the coal economizer and the air preheater respectively heats the water and the air entering the boiler. The preheated air is transported to the super-adiabatic combustion chamber **13** so as to improve the combustion temperature in the super-adiabatic combustion chamber. For example, the super-adiabatic combustion chamber **13** adopts the air preheated at 70-150°C, the combustion temperature in the super-adiabatic combustion chamber **13** is 1620°C-1700°C. In conditions of adopting the pre-heated air, the efficiency of the boiler of the invention is 92% above.

For example, the flue gas treating unit **5** further comprises a filtrate water spray separator **51,** so as to realize denitrification, desulfurization, dechlorination of the flue gas and removing other residual contaminants therefrom. In addition, the boiler of the invention is also configured with explosion-proof doors, water gauge, relief valve, pressure gauge, ignition door, a first thermometer for measuring a temperature of the combustion chamber, a second thermometer for measuring a temperature of the wall of the combustion chamber, a third thermometer for measuring a temperature of a radiative heat exchanger chamber, a fourth thermometer for measuring a temperature outside the drum. Temperatures of the above sensitive positions were monitored to further monitor the heat exchange process and device. A proper amount of thermal insulating layer is disposed in a bottom of the drum to perform the thermal protect of the drum.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the scope of the invention.

## Claims

1. A micron-biofuel high-temperature industrial boiler, wherein

   the industrial boiler comprises: a radiative heat exchange boiler (1), a convective heat exchange unit (2), a coal economizer (3), an air preheater (4), and a flue gas treating unit (5);
   the radiative heat exchange boiler (1) comprises: at least one fuel nozzle (11) installed on a bottom of the boiler, a waterpipe thermal insulation layer (12), a super-adiabatic combustion chamber (13) disposed on a middle-lower part in a cavity of the boiler, a drum (14) disposed at a top of the cavity of the boiler, and a slagging mechanism (15) disposed at the bottom of the boiler; the at least one fuel nozzle (11) are configured to spray a fluid state dust cloud formed by premixing a micron-biofuel with air into the super-adiabatic combustion chamber (13); the fuel nozzle (11) is adapted to spray the fluid state dust in a tangential direction at a flow rate of between 1m/s and 10 m/s; the super-adiabatic combustion chamber (13) is adapted such that a volumetric combustion intensity of the super-adiabatic combustion chamber (13) is set to be 150 kg/m$^3$-350 kg/m$^3$; a sidewall of the super-adiabatic combustion chamber (13) is formed by a layer of thermal insulation materials, and is surrounded by the waterpipe thermal insulation layer (12); the waterpipe thermal insulation layer (12) is adapted to make a heat quantity passing through a sidewall equal to or smaller than 10% of a combustion energy of the fuel, thus forming a relatively closed space for thermal storage and combustion; a radiative heat exchange water cooling wall (16) is installed on a top of the super-adiabatic combustion chamber and extended to the drum (14); when in use, irradiative heat transfer is performed between the high temperature flame produced from combustion and the radiative heat exchange water cooling wall (16), and a high temperature steam is accumulated to the drum (14);
   the convective heat exchange unit (2) and the radiative heat exchange boiler are separately arranged; the convective heat exchange unit (2) comprises: a water inlet (21) and a water outlet (22) connected to the radiative heat exchange water cooling wall (16); the convective heat exchange unit (2) is connected to the radiative heat exchange boiler (1) via a flue gas outlet disposed at an upper part of a boiler furnace to realize the convective heat exchange of flue gas produced from the high temperature combustion in the super-adiabatic combustion chamber; and
   the coal economizer (3) and the air preheater (4) are respectively arranged on a downstream of the convective heat exchange unit (2), and the coal economizer (3) and the air preheater (4) are adapted such that the flue gas passing through the coal economizer and the air preheater respectively heats the water and the air entering the boiler; the super-adiabatic combustion chamber (13) is adapted such that preheated air is transported to the super-adiabatic combustion chamber (13) so as to improve the combustion temperature in the super-adiabatic combustion chamber; and the flue treating unit (5) is disposed in the downstream of the air preheater and is adapted to remove dust from the flue gas and discharging the flue gas.

2. The industrial boiler of claim 1, wherein the fuel nozzle (11) is adapted to spray the fluid state dust cloud that is a mixture of the micro-biofuel and air and that has an excess air coefficient of 0.98-1.25 into the super-adiabatic combustion (13).

3. The industrial boiler of claim 1 or 2, wherein the super-adiabatic combustion chamber (13) further comprises a steam inlet; wherein the steam inlet is adapted to supplement steam to the super-adiabatic combustion chamber during the combustion process; and the super-adiabatic combustion chamber is adapted such that a ratio of an addition of the steam to a weight of the micro-biofuel is set to between 1:30 and 150:1.

4. The industrial boiler of claim 3, wherein the super-adiabatic combustion chamber is adapted such that the volumetric combustion intensity of the super-adiabatic combustion chamber is set to 200 - 300 $kg/m^3$, and a heat quantity passing through the sidewall of the super-adiabatic combustion chamber is equal to or smaller than 3% - 6%.

5. The industrial boiler of claim 4, wherein the super-adiabatic combustion chamber is a relatively closed thermal storage space enclosed by a sidewall formed by a layer of a fiber thermal insulation material, and a thickness of the sidewall is between 80 and 320 mm, and a ratio of a height of the combustion chamber and an average area of a cross section thereof is 0.8-4.

6. The industrial boiler of any of claims 1-3, wherein a diameter of each of the at least one fuel nozzles (11) is set to be between 1/20 and 1/8 of a diameter of the super-adiabatic combustion chamber (13); a caliber of a slagging piston at a lowest level of the super-adiabatic combustion chamber is between 1/25 and 1/15 of the diameter of the super-adiabatic combustion chamber, and preferably 1/22-1/18; and a ratio of a volume of the super-adiabatic combustion chamber to a capacity of a cavity of the radiative heat exchange boiler is set to be 0.8:4.

7. The industrial boiler of any of claims 1-6, wherein a bottom of the radiative heat exchange boiler (1) comprises a service manhole for maintaining a furnace; a service pit (19) is disposed beneath the service manhole (18) to form a service passage to the furnace; one end of the service passage is inclined downwardly, and an automatic pumping mechanism is disposed at a lowest end of the service passage to discharge the water therefrom.

8. The industrial boiler of any of claims 1-7, wherein the super-adiabatic combustion chamber is adapted such that a first average combustion temperature of the super-adiabatic combustion chamber is 1500-1600°C when the air at the normal temperature and the micron-biofuel are pre-mixed and combusted, and a second average combustion temperature of the super-adiabatic combustion chamber is 1620-1700°C when the air preheated at 70-150°C and the micro-biofuel are pre-mixed and combusted.

**Patentansprüche**

1. Hochtemperatur-Industriekessel für Mikron-Biomassebrennstoff, wobei

der Industriekessel umfasst: einen Strahlungswärmetauscherkessel (1), eine konvektive Wärmetauschereinheit (2), einen Kohle-Economiser (3), einen Luftvorwärmer (4) und eine Rauchgasbehandlungseinheit (5); der Strahlungswärmetauscherkessel (1) umfasst: mindestens eine Brennstoffdüse (11), die an einer Unterseite des Kessels installiert ist, eine Wasserrohr-Wärmedämmschicht (12), eine superadiabatische Brennkammer (13), die auf einem mittigen unteren Teil in einem Hohlraum des Kessels angeordnet ist, einen Sammler (14), der an einer Oberseite des Hohlraums des Kessels angeordnet ist, und einen Verschlackungsmechanismus (15), der an der Unterseite des Kessels angeordnet ist; wobei die mindestens eine Brennstoffdüse (11) konfiguriert ist, um eine Staubwolke im fluiden Zustand, die durch Vormischen eines Mikron-Biobrennstoffs mit Luft gebildet wird, in die superadiabatische Brennkammer (13) zu versprühen; wobei die Brennstoffdüse (11) eingerichtet ist, um den Staub im fluiden Zustand in tangentialer Richtung mit einer Strömungsgeschwindigkeit zwischen 1 m/s und 10 m/s zu versprühen; wobei die superadiabatische Brennkammer (13) derart eingerichtet ist, dass eine volumetrische Verbrennungsintensität der superadiabatischen Brennkammer (13) auf 150 $kg/m^3$ - 350 $kg/m^3$ eingestellt ist; eine Seitenwand der superadiabatischen Brennkammer (13) durch eine Schicht aus Wärmedämmmaterialien gebildet wird und von der Wärmedämmschicht (12) der Wasserleitung umgeben ist; wobei die Wärmedämmschicht (12) der Wasserleitung so eingerichtet ist, dass eine Wärmemenge, die durch eine Seitenwand hindurchgeht, gleich oder kleiner als 10 % einer Verbrennungsenergie des Brennstoffs ist, wodurch ein relativ geschlossener Raum für die Wärmespeicherung und Verbrennung gebildet wird; eine Strahlungswärmeaustausch-Wasserkühlwand (16) auf einer Oberseite der superadiabatischen Brennkammer installiert und bis zu dem Sammler (14) ausgedehnt ist; wobei im Gebrauch eine Strahlungswärmeübertragung zwischen der durch Verbrennung erzeugten Hochtemperaturflamme und der Strahlungswärmeaustausch-Wasserkühlwand (16) durchgeführt wird und ein Hochtemperaturdampf in dem Sammler (14) gespeichert wird; die konvektive Wärmetauschereinheit (2) und der Strahlungswärmetauscherkessel separat angeordnet sind; wobei die konvektive Wärmetauschereinheit (2) umfasst: einen Wassereinlass (21) und einen Wasserauslass (22), die mit der Strahlungswärmeaustausch-Wasserkühlungswand (16) verbunden sind; die konvektive Wärmetauschereinheit (2) mit dem Strahlungswärmetauscherkessel (1) über einen Rauchgasauslass verbunden ist, der an einem oberen Teil eines Kesselfeuerraums angeordnet ist, um den konvektiven Wärmetausch von Rauchgas, das durch die Hochtemperaturverbrennung erzeugt wurde, in der superadiabatischen Brennkammer zu realisieren; und

der Kohle-Economiser (3) und der Luftvorwärmer (4) jeweils stromabwärts von der konvektiven Wärmetauschereinheit (2) angeordnet sind, und der Kohle-Economiser (3) und der Luftvorwärmer (4) derart eingerichtet sind, dass das durch den Kohle-Economiser und den Luftvorwärmer strömende Rauchgas jeweils das Wasser und die in den Kessel eintretende Luft erwärmt; wobei die superadiabatische Brennkammer (13) derart eingerichtet ist, dass vorgewärmte Luft zur superadiabatischen Brennkammer (13) transportiert wird, um die Verbrennungstemperatur in der superadiabatischen Brennkammer zu verbessern; und die Rauchgasbehandlungseinheit (5) stromabwärts von dem Luftvorwärmer angeordnet ist und eingerichtet ist, um Staub aus dem Rauchgas zu entfernen und das Rauchgas auszuschleusen.

2. Industriekessel nach Anspruch 1, wobei die Brennstoffdüse (11) eingerichtet ist, um die Staubwolke im fluiden Zustand, die ein Gemisch aus dem Mikron-Biobrennstoff und Luft ist, und die einen Luftüberschusskoeffizienten von 0,98 bis 1,25 aufweist, in die superadiabatische Brennkammer (13) zu sprühen.

3. Industriekessel nach Anspruch 1 oder 2, wobei die superadiabatische Brennkammer (13) ferner einen Dampfeinlass umfasst; wobei der Dampfeinlass eingerichtet ist, um während des Verbrennungsprozesses Dampf in der superadiabatischen Brennkammer zu ergänzen; und die superadiabatische Brennkammer ist derart eingerichtet ist, dass ein Verhältnis einer Zugabe des Dampfes zu einem Gewicht des Mikron-Biobrennstoffs auf zwischen 1:30 und 150:1 eingestellt ist.

4. Industriekessel nach Anspruch 3, wobei die superadiabatische Brennkammer derart eingerichtet ist, dass die volumetrische Verbrennungsintensität der superadiabatischen Brennkammer auf 200 - 300 kg/m$^3$ eingestellt ist und eine Wärmemenge, die durch die Seitenwand der superadiabatischen Brennkammer hindurchgeht, gleich oder kleiner als 3 % bis 6 % ist.

5. Industriekessel nach Anspruch 4, wobei die superadiabatische Brennkammer ein relativ geschlossener Wärmespeicherraum ist, der von einer Seitenwand eingeschlossen ist, die durch eine Schicht aus einem Faserwärmedämmmaterial gebildet ist, und eine Dicke der Seitenwand zwischen 80 und 320 mm liegt, und ein Verhältnis einer Höhe der Brennkammer und einer durchschnittlichen Fläche eines Querschnitts davon 0,8 bis 4 beträgt.

6. Industriekessel nach einem der Ansprüche 1 bis 3, wobei ein Durchmesser von jeder der mindestens einen Brennstoffdüse (11) zwischen 1/20 und 1/8 eines Durchmessers der superadiabatischen Brennkammer (13) eingestellt ist; ein Kaliber eines Verschlackungskolbens auf der untersten Ebene der superadiabatischen Brennkammer zwischen 1/25 und 1/15 des Durchmessers der superadiabatischen Brennkammer, und vorzugsweise zwischen 1/22 und 1/18, liegt; und ein Verhältnis eines Volumens der superadiabatischen Brennkammer zu einer Kapazität eines Hohlraums des Strahlungswärmetauscherkessels auf 0.8:4 eingestellt ist.

7. Industriekessel nach einem der Ansprüche 1 bis 6, wobei eine Unterseite des Strahlungswärmetauscherkessels (1) einen Serviceschachteinstieg zum Warten eines Ofens umfasst; wobei eine Servicegrube (19) unterhalb des Serviceschachteinstiegs (18) angeordnet ist, um einen Servicegang zum Ofen zu bilden; wobei ein Ende des Serviceganges nach unten geneigt ist, und ein automatischer Pumpmechanismus an einem untersten Ende des Serviceganges angeordnet ist, um das Wasser aus diesem abzuleiten.

8. Industriekessel nach einem der Ansprüche 1 bis 7, wobei die superadiabatische Brennkammer derart eingerichtet ist, dass eine erste durchschnittliche Verbrennungstemperatur der superadiabatischen Brennkammer 1.500 bis 1.600 °C beträgt, wenn die Luft bei der Normaltemperatur und der Mikron-Biobrennstoff vorgemischt und verbrannt werden, und eine zweite durchschnittliche Verbrennungstemperatur der superadiabatischen Brennkammer 1.620 bis 1.700 °C beträgt, wenn die auf 70 bis 150 °C vorgewärmte Luft und der Mikron-Biobrennstoff vorgemischt und verbrannt werden.

## Revendications

1. Chaudière industrielle à haute température à biocombustible de taille micrométrique, dans laquelle

la chaudière industrielle comprend : une chaudière d'échange de chaleur par radiation (1), une unité d'échange de chaleur par convection (2), un économiseur de charbon (3), un réchauffeur d'air (4) une unité de traitement de gaz de carneau (5) ;

la chaudière d'échange de chaleur par radiation (1) comprend : au moins une buse pour combustible (11) installée sur une partie inférieure de la chaudière, une couche d'isolation thermique de conduite d'eau (12), une chambre de combustion super-adiabatique (13) disposée sur une partie intermédiaire inférieure dans une cavité de la chaudière, un tambour (14) disposé au niveau d'une partie supérieure de la cavité de la chaudière, et un mécanisme de décrassage (15) disposé au niveau de la partie inférieure de la chaudière ; l'au moins une buse pour carburant (11) est configurée pour pulvériser un nuage de poussière à l'état fluide formé par pré-mélange d'un biocarburant de taille micrométrique avec de l'air dans la chambre de combustion super-adiabatique (13) ; la buse pour carburant (11) est adaptée à pulvériser la poussière à l'état fluide dans une direction tangentielle à un débit compris entre 1 m/s et 10 m/s ; la chambre de combustion super-adiabatique (13) est adaptée pour qu'une intensité de combustion volumétrique de la chambre de combustion super-adiabatique (13) soit définie pour être de 150 kg/m3 à 350 kg/m3 ; une paroi latérale de la chambre de combustion super-adiabatique (13) est formée par une couche de matériaux d'isolation thermique, et est entourée par la couche d'isolation thermique de conduite d'eau (12) ; la couche d'isolation thermique de conduite d'eau (12) est adaptée à rendre une quantité de chaleur traversant une paroi latérale inférieure ou égale à 10 % d'une énergie de combustion du carburant, formant ainsi un espace relativement fermé pour le stockage thermique et la combustion ; une paroi de refroidissement d'eau par échange de chaleur par radiation (16) est installée sur une partie supérieure de la chambre de combustion super-adiabatique et s'étend jusqu'au tambour (14) ; durant l'utilisation, le transfert de chaleur par irradiation est réalisé entre la flamme à haute température produite par la combustion et la paroi de refroidissement d'eau par échange de chaleur par radiation (16), et une vapeur à haute température s'accumule dans le tambour (14) ;

l'unité d'échange de chaleur par convection (2) et la chaudière d'échange de chaleur par rayonnement sont séparément agencées ; l'unité d'échange de chaleur par convection (2) comprend : une entrée d'eau (21) et une sortie d'eau (22) raccordées à la paroi de refroidissement d'eau par échange de chaleur par radiation (16) ; l'unité d'échange de chaleur par convection (2) est raccordée à la chaudière d'échange de chaleur par radiation (1) via une sortie de gaz de carneau disposée au niveau d'une partie supérieure d'un foyer de chaudière pour réaliser l'échange de chaleur par convection du gaz de carneau produit par la combustion à haute température dans la chambre de combustion super-adiabatique ; et

l'économiseur de charbon (3) et le réchauffeur d'air (4) sont respectivement disposés sur une partie aval de l'unité d'échange de chaleur par convection (2), et l'économiseur de charbon (3) et le réchauffeur d'air (4) sont adaptés de telle sorte que le gaz de carneau traversant l'économiseur de charbon et le réchauffeur d'air chauffe respectivement l'eau et l'air entrant dans la chaudière ; la chambre de combustion super-adiabatique (13) est adaptée de manière à ce que l'air réchauffé soit transporté à la chambre de combustion super-adiabatique (13) pour améliorer la température de combustion dans la chambre de combustion super-adiabatique ; et l'unité de traitement de gaz de carneau (5) est disposée en aval du réchauffeur d'air et est adaptée à retirer la poussière du gaz de carneau et décharger le gaz de carneau.

2. Chaudière industrielle selon la revendication 1, dans laquelle la buse pour carburant (11) est adaptée à pulvériser le nuage de poussière à l'état fluide qui est un mélange de biocarburant de taille micrométrique et d'air et qui a un coefficient d'excès d'air de 0,98 à 1,25 dans la chambre de combustion super-adiabatique (13).

3. Chaudière industrielle selon la revendication 1 ou 2, dans laquelle la chambre de combustion super-adiabatique (13) comprend en outre une entrée de vapeur ; dans laquelle l'entrée de vapeur est adaptée pour supplémenter en vapeur la chambre de combustion super-adiabatique durant le processus de combustion ; et la chambre de combustion super-adiabatique est adaptée pour qu'un rapport d'un ajout de la vapeur à un poids du biocarburant de taille micrométrique soit défini entre 1/30 et 150/1.

4. Chaudière industrielle selon la revendication 3, dans laquelle la chambre de combustion super-adiabatique est adaptée pour qu'une intensité de combustion volumétrique de la chambre de combustion super-adiabatique soit définie pour être de 200 à 300 kg/m3, et une quantité de chaleur passant à travers la paroi latérale de la chambre de combustion super-adiabatique est inférieure ou égale à 3 % à 6 %.

5. Chaudière industrielle selon la revendication 4, dans laquelle la chambre de combustion super-adiabatique est un espace de stockage thermique relativement fermé entouré d'une paroi latérale formée par une couche d'un matériau d'isolation thermique fibreux, et une épaisseur de la paroi latérale est comprise entre 80 et 320 mm, et un rapport d'une hauteur de la chambre de combustion et d'une aire moyenne d'une section transversale de celle-ci est de 0,8 à 4.

**6.** Chaudière industrielle selon l'une quelconque des revendications 1 à 3, dans laquelle un diamètre de chacune des au moins une buse pour carburant (11) est défini pour être entre 1/20 et 1/8 d'un diamètre de la chambre de combustion super-adiabatique (13) ; un calibre d'un piston de décrassage d'un niveau inférieur de la chambre de combustion super-adiabatique est compris entre 1/25 et 1/15 du diamètre de la chambre de combustion super-adiabatique, et de préférence entre 1/22 et 1/18 ; et un rapport d'un volume de la chambre de combustion super-adiabatique sur une capacité d'une cavité de la chaudière d'échange de chaleur par radiation est défini pour être de 0,8/4.

**7.** Chaudière industrielle selon l'une quelconque des revendications 1 à 6, dans laquelle une partie inférieure de la chaudière d'échange de chaleur par radiation (1) comprend un trou d'homme de service pour l'entretien d'un four ; une fosse de service (19) est disposée en dessous du trou d'homme de service (18) pour former un passage de service menant au four ; une extrémité du passage de service est inclinée vers le bas, et un mécanisme de pompage automatique est disposé au niveau d'une extrémité inférieure du passage de service pour décharger l'eau de celui-ci.

**8.** Chaudière industrielle selon l'une quelconque des revendications 1 à 7, dans laquelle la cambre de combustion super-adiabatique est adaptée de manière à ce qu'une température de combustion moyenne de la chambre de combustion super-adiabatique soit de 1 500 à 1 600 °C lorsque l'air à la température normale et le biocarburant de taille micrométrique sont pré-mélangés et brûlés, et une seconde température de combustion moyenne de la chambre de combustion super-adiabatique est de 1 620 à 1 700 °C lorsque l'air réchauffé à 70 à 150 °C et le biocarburant de taille micrométrique sont pré-mélangés et brûlés.

**FIG. 1**

**FIG. 2**

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102818247 A
- US 355843 A
- EP 2039994 A2
- CN 2714965 Y